(19) Europäisches Patentamt
European Patent Office
Office européen des brevets

(11) Numéro de publication : **0 122 838**
**B1**

(12) **FASCICULE DE BREVET EUROPÉEN**

(45) Date de publication du fascicule du brevet : **22.10.86**

(21) Numéro de dépôt : **84400618.9**

(22) Date de dépôt : **28.03.84**

(51) Int. Cl.[4] : **C 10 K 1/20**, C 10 K 1/26, C 01 B 17/027

(54) **Procédé de régénération à haute température d'une masse d'absorption de composés soufrés contenant du fer.**

(30) Priorité : **08.04.83 FR 8305903**

(43) Date de publication de la demande : **24.10.84 Bulletin 84/43**

(45) Mention de la délivrance du brevet : **22.10.86 Bulletin 86/43**

(84) Etats contractants désignés : **BE DE GB IT NL**

(56) Documents cités :
**US-A- 4 008 174**
**CHEMICAL ABSTRACTS, vol. 91, no. 16, 15 octobre 1979, page 149, no. 125980e, Columbus, Ohio, US**

(73) Titulaire : **INSTITUT FRANCAIS DU PETROLE**
**4, Avenue de Bois-Préau**
**F-92502 Rueil-Malmaison (FR)**

(72) Inventeur : **Hotier, Gérard**
**13 rue Michelet**
**92502 Rueil-Malmaison (FR)**
Inventeur : **Servage, Gisèle**
**88, rue Veuve Lacroix**
**F-92000 Nanterre (FR)**

**EP 0 122 838 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

L'invention concerne un procédé permettant de purifier un gaz renfermant de l'hydrogène sulfuré et/ou de l'oxysulfure de carbone et/ou du sulfure de carbone au moyen d'une masse d'absorption contenant de l'oxyde de fer. Elle concerne plus particulièrement la régénération de cette masse qui intervient lorsqu'elle a été sulfurée.

Les gaz de gazéification du charbon ou des résidus pétroliers lourds contiennent généralement de l'hydrogène sulfuré, de l'oxysulfure de carbone et du sulfure de carbone.

Ils peuvent être utilisés :

— pour produire de l'énergie (production d'électricité par cycles combinés par exemple) ou

— pour produire des gaz de synthèse.

Dans les deux cas les composés soufrés doivent être éliminés du gaz. Ces gaz sont habituellement disponibles à température élevée, par exemple 800° à 1 400 °C.

La désulfuration peut être menée à froid par un procédé de lavage par un solvant comme le méthanol ou les amines. La chaleur sensible du gaz de gazéification est alors récupérée par un train d'échangeurs croisés entre le gaz brut et le gaz désulfuré ou au moyen d'un solide inerte servant de volant thermique. Ce type de traitement est notamment décrit dans les brevets US 3 976 446 et 4 303 415.

Il conduit cependant à des pertes thermiques importantes.

On préfère donc mener la désulfuration à haute température (typiquement à plus de 500 °C) en faisant passer le gaz à épurer sur un oxyde ou un carbonate métallique. L'hydrogène sulfuré conduit à un sulfure métallique, tandis que le sulfure et l'oxysulfure de carbone sont hydrolysés en hydrogène sulfuré qui peut à son tour être capté. Parmi les solides habituellement employés on trouve :

1. La chaux, le carbonate de calcium, la dolomite, la dolomite demi-calcinée (voir brevets US n$^{os}$ 3 276 203, 3 307 350 et 3 853 538). Cependant, la régénération de ces solides par des mélanges $CO_2$—$H_2O$ reste incomplète, il en résulte des pertes d'activité importantes puisqu'au bout de dix cycles, la dolomite n'a plus que 10 à 20 % de sa capacité désulfurante d'origine.

2. L'oxyde de zinc est également employé dans de nombreux procédés commerciaux pour capter l'hydrogène sulfuré. Il peut être régénéré par de l'air ou mieux par de l'air dilué au moyen d'azote ou de vapeur d'eau pour éviter les chocs thermiques ayant pour effet de diminuer les performances ultérieures.

3. Les oxydes et carbonates de manganèse purifiés ou sous forme de minerai permettent également d'atteindre de bons niveaux de désulfuration. La régénération s'effectue par des mélanges oxygène gaz carbonique dilués ou non par de la vapeur d'eau ou un gaz inerte (voir brevets US n$^{os}$ 4 164 544, 4 180 549, 4 230 603). Les oxydes de fer, les cendres contenant de l'oxyde de fer, le fer métallique sous forme d'éponge de fer sont également couramment employés pour désulfurer les gaz contenant de l'$H_2S$ et/ou du COS et/ou du $CS_2$ suivant les réactions :

1— $Fe_2O_3 + 2\ H_2S + H_2 \rightleftharpoons 2\ FeS + 3\ H_2O$
2— $Fe_3O_4 + 3\ H_2S + H_2 \rightleftharpoons 3\ FeS + 4\ H_2O$
3— $FeO + H_2S \rightleftharpoons FeS + H_2O$
4— $Fe + H_2S \rightleftharpoons FeS + H_2$

La régénération du sulfure de fer en oxyde de fer se fait aisément par grillage à l'air (dilué ou non par de la vapeur d'eau ou par un gaz inerte) du FeS suivant les réactions :

5— $2\ FeS + 7/2\ O_2 \rightleftharpoons Fe_2O_3 + 2\ SO_2$
6— $3\ FeS + 5\ O_2 \rightleftharpoons Fe_3O_4 + 3\ SO_2$

— OLDAKER, E.C., Poston A.M., Farrior W.L. (1975)
Publication MERC/TPR 75/2, Morgantown Energy Research center, W.S. ERDA, Morgantown, W.V.
— ABEL, W.T., Shultz, F.W., Langdon, P.F. (1974)
Publication R.I. 7947, Bureau of Mine, W.S. Department of the interior, Morgantown W.V.
— Brevets US 4 230 594, 4 273 749.

La chaleur dégagée au cours de la réaction 5 atteint environ deux milliers de kilojoules par mole. Le choc thermique encaissé par des billes des extrudés ou des tablettes à base d'oxyde de fer est tel qu'il en résulte une très forte perte de propriétés mécaniques.

De plus les réglementations récentes fixent un rapport limite entre la quantité de $SO_2$ rejetée à l'atmosphère et l'énergie produite. Le $SO_2$ produit au cours de la régénération doit être réduit en soufre suivant l'une des réactions qui constituent la base des procédés TRAIL et RESOX.

7— $SO_2 + C \longrightarrow CO_2 + 1/2\ S_2$
8— $SO_2 + 2\ C \longrightarrow + 2\ CO + 1/2\ S_2$
9— $SO_2 + 2\ H_2 \longrightarrow 2\ H_2O + 1/2\ S_2$

Au cours de la régénération par l'oxygène, suivant la température et la pression partielle d'oxygène, il

arrive que l'on produise du soufre élémentaire.

— SCHRODT, J.T., Hahn, O.J. (1976)

Publication IMMR 15-PD11-76, Institute for Mining and Minerals Research, University of Kentucky, Lexington, K.Y.

— JOSHI, D.K., Lenenberger, E.L. (1977)

Publication FE 2033-19, US Energy Research and Development administration, Washington D.C., Prepared by Air Products and Chemicals, Inc., Marcus Hook, P.A.

Par rapport à la totalité du soufre disponible la quantité de soufre élémentaire effectivement produite ne peut dépasser 15 % à 20 %. D'autre part la présence de soufre élémentaire ne permet pas l'existence de $Fe_2O_3$, le fer régénéré est sous forme $Fe_3O_4$.

Il est possible d'utiliser la réaction :

$$10— \quad 3\ FeS + 2\ SO_2 \longrightarrow Fe_3O_4 + 5/2\ S_2$$

pour régénérer le sulfure de fer en oxyde. Cependant des réactions parasites restent possibles, elles conduisent au sulfate de fer ou aux oxydes non stœchiométriques type WUSTITE.

— BIENSTOCK, BRUNN, MURPHY, BENSON (1958)

Sulfur dioxyde : its chemistry and removal from industrial Waste gases. inf. circ. 7836 Bureau of Mine US department of the interior.

— Chemistry of Hot gas cleanup in coal gasification and combustion. Morgantown Energy Research Center, Morgantown West Virginia, Publication MERC/SP 78/2.

On a maintenant découvert et c'est ce qui fait l'objet de l'invention que les masses absorbantes à base d'oxyde de fer, sulfurées par le contact avec des gaz contenant de l'hydrogène sulfuré et/ou de l'oxysulfure de carbone et/ou du sulfure de carbone peuvent être régénérées par le procédé ci-après :

a) on met la masse d'oxyde de fer sulfuré en contact avec un gaz de régénération renfermant au moins 5 % (de préférence au moins 50 %) en volume de dioxyde de soufre et au moins l'un des réactifs du groupe soufre élémentaire gazeux et vapeur d'eau, l'un au moins d'entre eux étant en quantité satisfaisant la condition :

soufre gazeux : au moins 100 ppm (de préférence au moins 400 ppm) en volume exprimé en $S_2$

vapeur d'eau : au moins 3 %, de préférence au moins 10 % en volume,

à une température de 600 °C à 1 100 °C, sous une pression de 0,1 à 50 bars de manière à convertir la masse en oxyde de fer et à former un gaz enrichi en soufre élémentaire.

b) on sépare du gaz résultant une partie du soufre élémentaire qu'il contient, par exemple de 10 % à 90 % de ce soufre ;

c) on fait réagir le gaz résultant, débarrassé d'une partie de son soufre, avec un gaz d'appoint contenant de l'oxygène moléculaire à une température de 300 à 1 500 °C sous une pression de 0,1 à 50 bars, la quantité d'oxygène introduite étant choisie de manière à satisfaire la double condition :

α) d'avoir

$$\frac{0{,}5\ DMS_2 + 0{,}75\ DMH_2S + 2\ DMH_2}{DMO_2} > 1{,}04$$

où

— $DMS_2$ : débit molaire de soufre élémentaire (exprimé en $S_2$) dans le gaz soumis à l'étape (c).

— $DMH_2S$ : débit molaire d'hydrogène sulfuré dans le gaz de recyclage soumis à l'étape (c).

— $DMH_2$ : débit molaire d'hydrogène dans le gaz de recyclage soumis à l'étape (c).

— $DMO_2$ : débit molaire d'oxygène d'appoint.

et

β) de porter la teneur en dioxyde de soufre du gaz à au moins 5 % (de préférence au moins 50 %) en volume.

d) on recycle à l'étape (a) le gaz obtenu à l'étape (c), une partie au moins du gaz de régénération ayant été reconstitué.

La figure jointe illustre l'invention.

La masse d'oxyde de fer, disposée dans le réacteur (1) a été préalablement utilisée pour absorber un gaz renfermant $H_2S$, COS et/ou $CS_2$. Le circuit de passage de ce gaz n'a pas été représenté, dans un but de simplification. A l'état initial la masse est donc à l'état sulfuré.

Le gaz de régénération, qui contient au moins 5 % de $SO_2$ ainsi que du soufre élémentaire et/ou de la vapeur d'eau et qui de préférence comprend du dioxyde de soufre, de la vapeur d'eau, du soufre élémentaire et un gaz inerte tel que l'azote est introduit dans le réacteur 1 par la conduite 4. L'oxygène est pratiquement absent de ce gaz.

Ce gaz est mis en contact avec la masse absorbante à base d'oxyde de fer au moins en partie sulfurée dans la zone de régénération 1. Au moins une partie du sulfure de fer y est transformée essentiellement en

magnétite ($Fe_3O_4$) suivant la réaction (10) :

$$—10 \quad 3\ FeS + 2\ SO_2 \rightleftarrows Fe_3O_4 + 5/2\ S_2$$

Lorsque de la vapeur d'eau est présente dans le gaz les réactions (2) et (11) s'ajoutent à la réaction (10) de sorte que au moins une partie du sulfure de fer est transformée dans la zone de régénération 1 en magnétite $Fe_3O_4$ suivant les réactions :

$$— 10 \quad 3\ FeS + 2\ SO_2 \rightleftarrows Fe_3O_4 + 5/2\ S_2$$
$$— 2 \quad 3\ FeS + 4\ H_2O \rightleftarrows Fe_3O_4 + 3\ H_2S + H_2$$
$$— 11 \quad 2\ H_2S + SO_2 \rightleftarrows 2\ H_2O + 3/2\ S_2$$

Dans la zone 1 la réaction peut être considérée comme athermique ou légèrement endothermique suivant la composition du gaz qui y entre.

La vitesse de régénération du sulfure de fer en oxyde de fer est alors égale à la somme des vitesses des réactions (10) et (2). Dans cette zone 1, la température est comprise entre 600 °C et 1 100 °C et de préférence entre 700 °C et 950 °C, la pression est comprise entre 0,1 et 50 bars et est de préférence entre 1 et 20 bars.

Le sulfure de fer a été écrit FeS et l'oxyde de fer $Fe_3O_4$ dans un but de simplification mais d'autres sulfures ou oxydes peuvent être présents, en particulier des formes non stœchiométriques de sulfure ou d'oxyde ; cette remarque est valable pour l'ensemble du présent brevet.

Le gaz issu de la zone 1 est envoyé par la conduite 5 dans la zone 2.

Dans la zone 2 au moins une partie du gaz issu de la zone 1 est débarrassée d'une partie au moins du soufre élémentaire qu'il contient par tout moyen connu. Le soufre est évacué par la ligne 9. Au gaz issu de la zone 2 (ligne 6), on ajoute éventuellement la partie du gaz issu de la zone 1 qui n'a pas transité par la zone 2 et qui est passé par la ligne 7. L'ensemble constitue le gaz de recyclage alimentant la zone 3.

La zone 2 peut contenir entre autres — un ou plusieurs échangeurs de chaleur, un ou plusieurs convertisseurs Claus de manière à pousser la réaction (11) le plus loin possible, un ou plusieurs condenseurs pour récupérer le soufre sous forme liquide et un ou plusieurs compresseurs pour faire circuler le gaz dans la boucle.

Le gaz de recyclage envoyé par la ligne 6 au réacteur 3 renferme du dioxyde de soufre. De manière préférée il renferme :

— du dioxyde de soufre, de la vapeur d'eau, du soufre élémentaire, de l'hydrogène sulfuré, de l'hydrogène et un gaz inerte tel que l'azote par exemple.

Le réacteur 3 reçoit un gaz contenant de l'oxygène par la conduite 8 ; ce gaz est de préférence aussi riche que possible en oxygène ; ce peut être de l'air enrichi en oxygène. Les débits respectifs de l'appoint d'oxygène et du gaz de recyclage sont tels que :

$$\frac{0,5\ DMS_2 + 0,75\ DMH_2S + 2\ DMH_2}{DMO_2} > 1,04$$

Dans cette zone 3 la température est comprise entre 300 °C et 1 500 °C et de manière préférée entre 600 °C et 1 100 °C. Cette zone peut contenir un catalyseur d'incinération des espèces soufrées comme par exemple de l'alumine. La pression dans cette zone est comprise entre 0,1 et 50 bars, de préférence entre 1 et 20 bars.

Le gaz issu de la zone de régénération 3 (ligne 5) diffère du gaz issu de la zone 1 au moins par le fait que sa teneur en dioxyde de soufre est plus faible et que sa teneur en soufre élémentaire est plus forte ; de manière préférée il diffère par le fait :

— que sa teneur en dioxyde de soufre est plus faible
— que sa teneur en soufre élémentaire est plus forte
— que sa teneur en vapeur d'eau est plus faible
— que de l'hydrogène sulfuré est apparu
— que de l'hydrogène est apparu.

La composition de ce gaz permet de calculer exactement l'appoint d'oxygène $DMO_2$ de la zone 3 suivant la relation :

$$DMO_2 = DMSO_2\ (3) + 1/2\ DMH_2O\ (3) — DMSO_2\ (1) — 1/2\ DMH_2O\ (1)$$

où

$DMSO_2$ (3) : débit molaire de $SO_2$ issu de la zone 3
$DMSO_2$ (1) : débit molaire de $SO_2$ issu de la zone 1
$DMH_2O$ (3) : débit molaire de $H_2O$ issu de la zone 3
$DMH_2O$ (1) : débit molaire de $H_2O$ issu de la zone 1.

Selon une forme particulière de mise en œuvre de l'invention, un gaz contenant plus de 100 ppm

volume d'$H_2S$ et/ou plus de 5 ppm volume de COS, par exemple de 500 à 50 000 ppm volume d'$H_2S$ et/ou de 25 à 2 500 ppm volume de COS et plus particulièrement de 1 000 à 20 000 ppm volume d'$H_2S$ et/ou de 50 à 1 500 ppm volume de COS est mis en contact avec un solide contenant plus de 10 % poids de fer et de préférence plus de 25 % poids de fer. Le fer peut être combiné soit sous forme d'hématite $Fe_2O_3$, soit sous forme de magnétite $Fe_3O_4$, soit sous forme de wustite FeO, soit sous forme de fer métallique soit sous forme d'oxyde non stœchiométrique. La température de réaction est comprise entre 450 °C et 850 °C et de préférence entre 550 °C et 700 °C.

La vitesse spatiale, c'est-à-dire le volume de gaz compté dans les conditions normales de température et de pression traité par volume de solide et par heure est comprise entre 100 et 15 000 et de préférence entre 200 et 5 000. La pression opératoire peut varier largement, par exemple de 1 à 100 bars ; on préfère généralement opérer à la pression à laquelle le gaz à épurer est disponible, c'est-à-dire de 1 à 30 bars dans le cas des gaz de gazéification. Les teneurs résiduelles en $H_2S$ et/ou COS et/ou $CS_2$ du gaz épuré sont maintenant inférieures à 400 ppm d'$H_2S$ et/ou 3 ppm de COS et/ou 1 ppm de $CS_2$ et plus généralement inférieures à 120 ppm d'$H_2S$ et/ou 1 ppm de COS et/ou 0,3 ppm de $CS_2$.

Lorsqu'au moins une partie du fer a été transformée en sulfure de fer selon l'une des réactions 1, 2, 3 ou 4, soit une fraction du solide selon un procédé continu, soit la totalité du solide selon un procédé discontinu (voir figure 2) est mis en contact avec un gaz de régénération dans le réacteur R1. Ce gaz contient au moins 5 % en volume de dioxyde de soufre et au moins soit 100 ppm en volume de soufre élémentaire ($S_2$), soit 3 % en volume de vapeur d'eau, et de manière préférée contient au moins 50 % en volume de dioxyde de soufre et au moins soit 400 ppm en volume de soufre élémentaire ($S_2$) soit 10 % en volume de vapeur d'eau, et de manière particulièrement préférée, contient de 50 % à 80 % en volume de dioxyde de soufre, de 20 à 50 % en volume de vapeur d'eau, de 0,04 % à 1,2 % en volume de soufre élémentaire ($S_2$) et de 5 % à 30 % en volume d'azote. La température de réaction est comprise entre 600 °C et 1 100 °C et de préférence entre 700 °C et 950 °C.

La vitesse spatiale définie comme ci-avant, se situe de préférence entre 100 et 15 000 et plus particulièrement entre 200 et 5 000.

La pression au cours de l'opération de régénération est généralement comprise entre 0,1 et 50 bars, et de préférence comprise entre 1 et 20 bars.

Au cours de l'opération de régénération, au moins une fraction du sulfure de fer est transformée en magnétite $Fe_3O_4$. Le gaz de régénération après son contact avec le solide contient, outre les constituants initiaux, par exemple de 0,1 % à 5 % volume de soufre $S_2$, de 0,1 à 3 % volume d'$H_2S$ et de 0,01 % à 0,8 % volume d'hydrogène.

Une partie au moins de ce gaz (ligne 11) est refroidie dans un échangeur E2 avant d'être envoyée par la ligne 12 dans une unité Claus CV2 de manière à ce que l'$H_2S$ formé et le $SO_2$ restant réagissent suivant la réaction 11 pour donner du soufre. Dans une telle unité les gaz contenant au moins une fraction de dioxyde de soufre et au moins une fraction d'hydrogène sulfuré sont mis en contact avec un catalyseur à base d'alumine à une température supérieure de 10 à 30 °C au point de rosée du soufre. En pratique on règlera la température de cette unité entre 180 °C et 280 °C suivant la teneur en soufre mesurée dans la ligne 11.

Ce courant gazeux (conduite 13) passe ensuite dans un condenseur C2 où l'on recueille au moins une partie du soufre élémentaire sous forme liquide (ligne 14). La température du condenseur est en pratique réglée entre 120 °C et 250 °C suivant la proportion de soufre vapeur que l'on désire condenser.

Après le condenseur (ligne 15), au point le plus froid de la boucle de régénération, un compresseur $CM_2$ permet de faire circuler l'ensemble des gaz. Une fois comprimé, le courant gazeux froid (ligne 16) est réchauffé dans l'échangeur E2. On envoie ensuite dans l'éjecteur à gaz EG3 :

1. Le courant gazeux (ligne 16) débarrassé d'une partie au moins du soufre élémentaire qu'il contenait.

2. L'éventuelle fraction de gaz (ligne 17) sortant du réacteur R1 qui n'est pas passée dans le convertisseur Claus et le condenseur.

3. Un appoint d'oxygène (ligne 18) destiné à reconstituer le dioxyde de soufre et l'eau consommés, suivant les réactions :

(12) $2H_2 + O_2 \rightleftarrows H_2O$

(13) $H_2S + 3/2\ O_2 \rightleftarrows H_2O + SO_2$

(14) $1/2\ S_2 + O_2 \rightleftarrows SO_2$

La quantité d'oxygène envoyé à l'éjecteur EG3 est calculée par la relation suivante :

$$DMO_2 = [DMSO_2\ (3) - DMSO_2\ (1)] + 1/2\ [DMH_2O\ (3) - DMH_2O\ (1)]$$

où

$DMO_2$ débit molaire d'oxygène d'appoint.

$DMSO_2$ (3) débit molaire de $SO_2$ à l'entrée du réacteur de régénération.

$DMSO_2$ (1) débit molaire de $SO_2$ à la sortie du réacteur de régénération.

$DMH_2O$ (3) débit molaire de $H_2O$ à l'entrée du réacteur de régénération.

$DMH_2O$ (1) débit molaire de $H_2O$ à la sortie du réacteur de régénération.

A la sortie de l'éjecteur à gaz EG3 (ligne 19) les gaz passent éventuellement sur un catalyseur RC3 de combustion des espèces soufrées telles que de l'alumine ou du platine supporté par de l'alumine. La fraction de gaz sortant du réacteur R1 qui est renvoyée directement en E G 3 (ligne 17) et la température du condenseur C2 sont réglées de manière à ce que la relation suivante soit en outre vérifiée :

$$\frac{0{,}5\ DMS_2 + 0{,}75\ DMH_2S + 2\ DMH_2}{DMO_2} > 1{,}04$$

$DMS_2$, $DMH_2S$ et $DMH_2$ gardant les mêmes significations que précédemment. Le gaz est recyclé au réacteur R1 par la ligne 20.

## Exemple 1

Tant pour cet exemple que pour les suivants, les masses absorbantes à base d'oxyde de fer servant à éliminer l'hydrogène sulfuré et/ou l'oxysulfure de carbone et/ou le sulfure de carbone sont constituées d'un déchet industriel connu sous le nom de « boues rouges », provenant de la fabrication de l'aluminium.

Un kilogramme de boues rouges est empâté par 133 $cm^3$ de solution aqueuse de méthylcellulose, extrudé, séché à 100 °C, calciné trois heures à 800 °C. La composition des extrudés est la suivante :

| | |
|---|---|
| $Fe_3O_4$ | 38,35 % |
| $Al_2O_3$ | 19,05 % |
| $SiO_2$ | 9,72 % |
| $TiO_2$ | 8,97 % |
| CaO | 11,98 % |
| $CO_2$ | 3,34 % |
| $Na_2O$ | 7,45 % |

500 $cm^3$ de ces extrudés ont été utilisés pour désulfurer un gaz de composition ($H_2$ 50 %, $N_2$ 47,2 %, $H_2O$ 2,3 %, $H_2S$ 0,5 %) à 600 °C avec une vitesse spatiale de 2 000 $h^{-1}$. La masse sulfurée obtenue a été divisée en dix lots de 50 $cm^3$ que l'on régénère dans différentes conditions ; la vitesse de sortie du soufre renseigne sur la cinétique de la réaction, la pesée de chaque lot après régénération permet de connaître le degré éventuel de sulfatation (la perte de poids théorique étant de 2,4 g dans le cas d'une régénération parfaite ; dans le cas d'une sulfatation totale la prise de poids serait 14,4 g). Une nouvelle sulfuration faite dans les mêmes conditions que précédemment permet de juger de l'efficacité de la régénération (tableau 1). L'intérêt de respecter la teneur minimale en soufre apparaît nettement : à chaque fois que le gaz de régénération contient du soufre en quantité suffisante la quantité de sulfate formée est plus faible que lorsqu'il n'en contient pas, et le rapport ($H_2S$ 1re captation/$H_2S$ 2e captation) est plus fort que lorsqu'il n'en contient pas.

Tableau 1

| T°C | % $SO_2$ | %S($S_2$) | % $N_2$ | VVH | Vitesse initiale du sortie soufre mM/h($S_2$) | Durée du régime rapide | Temps de régénération | % de masse sulfa-tée | ($H_2S$ 2e captation / $H_2S$ 1e captation) |
|---|---|---|---|---|---|---|---|---|---|
| 700 | 100 | 0 | 0 | 200 | 4,4 | 22,7h | 53h15 | 46,5 | 0,542 |
| 800 | 100 | 0 | 0 | 200 | 8,35 | 13,2h | 41h | 38,1 | 0,724 |
| 900 | 100 | 0 | 0 | 200 | 13,35 | 9,2h | 25h | 26,4 | 0,701 |
| 800 | 10 | 0 | 90 | 2000 | 12,80 | 9,4h | 31h | 8,3 | 0,907 |
| 800 | 10 | 0,04 | 89,96 | 2000 | 13,35 | 10h | 23h30 | 2,7 | 0,947 |
| 900 | 10 | 0 | 90 | 2000 | 19,7 | 7h | 21h | 4,5 | 0,940 |

(Fortsetzung)

| T°C | % $SO_2$ | %S($S_2$) | % $N_2$ | VVH | Vitesse initiale sortie soufre mM/h($S_2$) | Durée du régime rapide | Temps de régéné-ration | % de masse sulfa-tée | (H₂S 2e captation / H₂S 1e captation) |
|---|---|---|---|---|---|---|---|---|---|
| 900 | 10 | 0,04 | 89,96 | 2000 | 22,6 | 6,5h | 18h30 | 0,8 | 0,960 |
| 900 | 50 | 0 | 50 | 400 | 15,05 | 8,5h | 24h | 7,1 | 0,831 |
| 900 | 50 | 0,04 | 49,96 | 400 | 15,95 | 8,3h | 19h | 2,8 | 0,875 |

Exemple 2

300 cm³ de boues rouges extrudées de l'exemple 1 ont été sulfurées par un gaz de composition ($H_2$ 50 %, $N_2$ 47,2 %, $H_2O$ 2,3 %, $H_2S$ 0,5 %) à 600° avec une vitesse spatiale de 2 000 $h^{-1}$. Cette quantité est divisée en six lots de 50 cm³ chacun que l'on régénère dans différentes conditions.

La mesure de la vitesse de sortie de soufre et de la teneur en $H_2S$ après passage sur un réacteur Claus ainsi que la pesée de chaque lot après régénération renseignent sur la cinétique de la réaction et l'éventuelle sulfatation, une nouvelle sulfuration faite dans les mêmes conditions que précédemment permet de vérifier l'efficacité de la régénération (voir tableau 2). L'intérêt d'envoyer des mélanges $SO_2$ — vapeur d'eau est double : d'une part la sulfatation est faible ou inexistante — d'autre part la vitesse de régénération est considérablement augmentée par rapport à des mélanges $SO_2$ — azote (voir tableau 2). En comparant les colonnes « Durée régime rapide » exprimant le temps pendant lequel la vitesse initiale de sortie de soufre est conservée et la colonne « Temps de régénération » des tableaux 1 et 2, on peut constater l'écart considérable des temps de régénération.

Tableau 2

| | COMPOSITION GAZ DE REGENERATION | | | | | | | | |
|---|---|---|---|---|---|---|---|---|---|
| T°C | % $SO_2$ | % $H_2O$ | % $N_2$ | VVH | Vitesse initiale sortie soufre mM/h($S_2$) | Durée de régime rapide | Temps de régéné ration | %de masse sulfa tée en poids | $H_2S$ 2e capta. / $H_2S$ 1e capta. |
| 700 | 10 | 80 | 10 | 2000 | 28,9 | 4h | 6h | 9,25% | 0,818 |
| 800 | 10 | 80 | 10 | 2000 | 29,7 | 4h | 5h | 8,93% | 0,947 |
| 900 | 10 | 80 | 10 | 2000 | 57,8 | 1h | 3h | 0% | 1,000 |
| 800 | 26 | 61 | 13 | 766 | 48,4 | 1h | 4h | 7,75% | 0,873 |
| 900 | 26 | 61 | 13 | 766 | 56 | 1h | 3h | 1,08% | 0,985 |
| 800 | 68 | 32 | 0 | 280 | 9,8 | 7h | 11h | 6,6 % | 0,885 |

Exemple 3

On passe 12,5 m³/h (exprimé aux conditions normales de température et de pression) d'un gaz ayant

la composition suivante : $H_2$ 29,67 %, $H_2O$ 15,64 %, $H_2S$ 0,75 %, CO 44,34 %, $CO_2$ 8,35 %, COS 0,08 %, $N_2$ 1,17 % à 20 bars et 600 °C, dans un réacteur contenant 10,5 litres de masse absorbante ayant les caractéristiques suivantes :

| | |
|---|---|
| densité apparente | 0,88 kg/dm$^3$ |
| $Fe_3O_4$ | 42 % poids |
| $SiO_2$ | 19 % poids |
| $Al_2O_3$ | 18 % poids |
| CaO | 12 % poids |
| $Na_2O$ | 8 % poids |
| $TiO_2$ | 8 % poids |
| $CO_2$ | 2,5 % poids |
| $P_2O_5$ | 0,2 % poids |
| $V_2O_5$ | 0,2 % poids |
| $Mn_3O_4$ | 0,1 % poids |

La composition moyenne du gaz à la sortie du réacteur est la suivante : $H_2$ 38,51 %, $H_2O$ 7,53 %, $H_2S$ 140 ppm, CO 35,22 %, $CO_2$ 17,55 %, COS non décelé, $N_2$ 1,17 %. La composition des gaz est mesurée par chromatographie en phase gazeuse, l'$H_2S$ dans le gaz épuré est dosé par l'acétate de cadmium. La figure 3 représente l'évolution de la teneur en $H_2S$ (en ppm) dans le gaz épuré en fonction du temps T en heures. Au bout de 11 heures l'expérience est arrêtée.

La masse qui pesait initialement 9,24 kg pèse maintenant 9,78 kg.

On passe ensuite 3,9 m$^3$/h (exprimé aux conditions normales de température et de pression) d'un gaz de composition $SO_2$ 60 %, $H_2O$ 35 %, $N_2$ 5 %, à la pression atmosphérique et 900 °C. A la sortie du réacteur on sépare l'effluent en deux courants. Le premier 1,9 m$^3$/h (conditions normales de température et de pression) est recyclé à l'éjecteur à gaz. Le second 1,8 m$^3$/h (conditions normales de température et de pression) est passé sur 1 l d'un catalyseur à base d'alumine porté à 240 °C le soufre est ensuite condensé à 120 °C.

On prélève 20 l/h (conditions normales de température et de pression) du gaz de ce second courant pour analyse (compte tenu du soufre condensé). Sa composition est la suivante : $SO_2$ 57,5 %, $H_2O$ 34,7 %, $N_2$ 5 %, « $S_2$ » 2,5 %, $H_2S$ 0,1 %, $H_2$ 0,2 %.

Le gaz restant (1,78 m$^3$/h) est compressé et envoyé à l'éjecteur à gaz. On ajoute de plus à ce niveau 120 l/h (conditions normales de température et de pression) d'un gaz de composition $O_2$ 93,6 %, $N_2$ 0,8 %, $H_2O$ 5,6 %.

A la sortie de l'éjecteur à gaz le courant gazeux de 3,9 m$^3$/h de gaz de composition $SO_2$ 60 %, $H_2O$ 35 %, $N_2$ 5 % ainsi reconstitué est réinjecté dans le réacteur.

On a porté sur la figure 4 la quantité de soufre condensée cumulée (S en kg) en fonction du temps (T en heures). Tout au long de l'expérience, la fraction de soufre condensée a été de 46,2 % (par rapport au soufre sortant du réacteur).

Au bout de 11 heures la réaction est arrêtée : on a recueilli 1 310 g de soufre.

La masse une fois refroidie est pesée : son poids est alors 9,25 kg, ce qui correspond à une transformation de 99,75 % du sulfure de fer en magnétite et de 0,25 % en sulfate de fer.

**Revendications**

1. Procédé de régénération d'une masse d'oxyde de fer sulfurée, caractérisé en ce qu'il comprend les étapes suivantes :

a) on met la masse d'oxyde de fer sulfurée en contact avec un gaz de régénération renfermant au moins 5 % en volume de dioxyde de soufre et au moins l'un des réactifs du groupe soufre élémentaire gazeux et vapeur d'eau, l'un au moins d'entre eux étant en quantité satisfaisant la condition :

— soufre gazeux : au moins 100 ppm en volume, exprimé en $S_2$,

— vapeur d'eau : au moins 3 % en volume, exprimé en $H_2O$,

à une température de 600 à 1 100 °C, sous une pression de 0,1 à 50 bars, de manière à convertir la masse en oxyde de fer et à former un gaz enrichi en soufre élémentaire.

b) on sépare du gaz résultant une partie du soufre élémentaire qu'il contient.

c) on fait réagir le gaz résultant, débarrassé d'une partie de son soufre, avec un gaz d'appoint contenant de l'oxygène moléculaire à une température de 300 à 1 500 °C, sous une pression de 0,1 à 50 bars, la quantité d'oxygène introduite étant choisie de manière à satisfaire la double condition :

α) d'avoir

$$\frac{0,5\ DMS_2 + 0,75\ DMH_2S + 2\ DMH_2}{DMO_2} > 1,04$$

où :

$DMS_2$ : débit molaire du soufre élémentaire (exprimé en $S_2$) dans le gaz soumis à l'étape (c).

$DMH_2S$ : débit molaire d'hydrogène sulfuré dans le gaz de recyclage soumis à l'étape (c).

$DMH_2$ : débit molaire d'hydrogène dans le gaz de recyclage soumis à l'étape (c).

$DMO_2$ : débit molaire d'oxygène d'appoint.

et :

β) de porter la teneur en dioxyde de soufre du gaz à au moins 5 % en volume et :

d) on recycle à l'étape (a) le gaz obtenu à l'étape (c).

2. Procédé selon la revendication 1, dans lequel, à l'étape (b), on sépare de 10 à 90 % du soufre.

3. Procédé selon la revendication 1 ou 2, dans lequel les conditions de contact de l'étape (a) correspondent à une réaction généralement endothermique ou athermique.

4. Procédé selon l'une des revendications 1 à 3, dans lequel le gaz de régénération de l'étape (a) renferme au moins 50 % en volume de dioxyde de soufre et au moins 400 ppm en volume de soufre gazeux et/ou au moins 10 % en volume de vapeur d'eau.

5. Procédé selon l'une des revendications 1 à 4, dans lequel le gaz de régénération ne contient substantiellement pas d'oxygène moléculaire.

6. Procédé selon l'une des revendications 1 à 5, dans lequel, dans les étapes (a) et (c), la température est de 600 à 1 100 °C et la pression de 1 à 20 bars.

7. Procédé selon l'une des revendications 1 à 6, dans lequel la quantité d'oxygène introduite à l'étape (c) répond à la condition :

$$DMO_2 = DMSO_2\ (3) + 1/2\ DMH_2O\ (3) - DMSO_2\ (1) - 1/2\ DMH_2O\ (1)$$

où

$DMSO_2$ (3) : débit molaire de $SO_2$ issu de la zone 3.

$DMSO_2$ (1) : débit molaire de $SO_2$ issu de la zone 1.

$DMH_2O$ (3) : débit molaire d'$H_2O$ issu de la zone 3.

$DMH_2O$ (1) : débit molaire d'$H_2O$ issu de la zone 1.

8. Procédé selon l'une des revendications 1 à 7, dans lequel la séparation du soufre de l'étape (c) est précédée du passage des gaz dans un convertisseur de type Claus.

9. Procédé cyclique de purification d'un gaz contenant de l'hydrogène sulfuré et/ou de l'oxysulfure de carbone et/ou du sulfure de carbone comprenant cycliquement une étape de purification consistant à faire passer le gaz sur une masse d'oxyde de fer et une étape de régénération consistant à faire passer un gaz oxydant sur la masse sulfurée pour régénérer ladite masse, caractérisé en ce que la régénération comprend les étapes suivantes :

a) on met la masse d'oxyde de fer sulfurée en contact avec un gaz de régénération renfermant au moins 5 % en volume de dioxyde de soufre et au moins l'un des réactifs du groupe soufre élémentaire gazeux et vapeur d'eau, l'un au moins d'entre eux étant en quantité satisfaisant la condition :

— soufre gazeux : au moins 100 ppm en volume, exprimé en $S_2$,

— vapeur d'eau : au moins 3 % en volume, exprimé en $H_2O$,

à une température de 600 à 1 100 °C, sous une pression de 0,1 à 50 bars, de manière à convertir la masse en oxyde de fer et à former un gaz enrichi en soufre élémentaire.

b) on sépare du gaz résultant une partie du soufre élémentaire qu'il contient.

c) on fait réagir le gaz résultant, débarrassé d'une partie de son soufre, avec un gaz d'appoint contenant de l'oxygène moléculaire à une température de 300 à 1 500 °C, sous une pression de 0,1 à 50 bars, la quantité d'oxygène introduite étant choisie de manière à satisfaire la double condition :

α) d'avoir

$$\frac{0,5\ DMS_2 + 0,75\ DMH_2S + 2\ DMH_2}{DMO_2} > 1,04$$

où :

$DMS_2$ : débit molaire du soufre élémentaire (exprimé en $S_2$) dans le gaz soumis à l'étape (c).

$DMH_2S$ : débit molaire d'hydrogène sulfuré dans le gaz de recyclage soumis à l'étape (c).

$DMH_2$ : débit molaire d'hydrogène dans le gaz de recyclage soumis à l'étape (c).

$DMO_2$ : débit molaire d'oxygène d'appoint.

et :

β) de porter la teneur en dioxyde de soufre du gaz à au moins 5 % en volume et

d) on recycle à l'étape (a) le gaz obtenu à l'étape (c).

10. Procédé selon la revendication 9, dans lequel le gaz de régénération de l'étape (a) renferme au moins 50 % en volume de dioxyde de soufre et au moins 400 ppm en volume de soufre gazeux et/ou au moins 10 % en volume de vapeur d'eau.

**Claims**

1. A process for the regeneration of a sulfided iron oxide mass, characterized in that it comprises the following stages :

a) the mass of sulfided iron oxide is brought into contact with a regeneration gas containing at least 5 % by volume of sulfur dioxide and at least one of the reagents from the group of gaseous elemental sulfur and steam, at least one of these being present in a quantity satisfying the condition :

— gaseous sulfur : at least 100 ppm by volume, expressed as $S_2$ ; and

— steam : at least 3 % by volume, expressed as $H_2O$ ;

at a temperature of 600 to 1 100 °C, under a pressure of 0.1 to 50 bars so as to convert the mass into iron oxide and form a gas enriched with elemental sulfur ;

b) a part of the elemental sulfur contained by the resultant gas is separated from it ;

c) the resultant gas, freed from part of its sulfur, is reacted with a make-up gas containing molecular oxygen at a temperature of 300 to 1 500 °C, under a pressure of 0.1 to 50 bars, the quantity of oxygen introduced being chosen so as to satisfy a double condition :

α) to have

$$\frac{0.5\ DMS_2 + 0.75\ DMH_2S + 2\ DMH_2}{DMO_2} > 1.04$$

where

$DMS_2$ : molar flow rate of elemental sulfur (expressed as $S_2$) in the gas subjected to stage (c) ;

$DMH_2S$ : molar flow rate of hydrogen sulfide in the recycling gas subjected to stage (c) ;

$DMH_2$ : molar flow rate of hydrogen in the recycling gases at stage (c) ; and

$DMO_2$ : molar flow rate of make-up oxygen ;

and

β) to raise the sulfur dioxide content of the gas to at least 5 % by volume ; and

d) the gas obtained at stage (c) is recycled to stage (a).

2. A process according to Claim 1, in which 10 to 90 % of the sulfur is separated in stage (b).

3. A process according to Claim 1 or 2, in which the contact conditions of stage (a) correspond to a generally endothermic or athermal reaction.

4. A process according to one of Claims 1 to 3, in which the regeneration gas at stage (a) contains at least 50 % by volume of sulfur dioxide and at least 400 ppm by volume of gaseous sulfur and/or at least 10 % by volume of steam.

5. A process according to one of Claims 1 to 4, in which the regeneration gas contains substantially no molecular oxygen.

6. A process according to one of Claims 1 to 5, in which the temperature is 600 to 1 100 °C and the pressure 1 to 20 bars at stages (a) and (c).

7. A process according to one of Claims 1 to 6, in which the quantity of oxygen introduced at stage (c) meets the condition ;

$$DMO_2 = DMSO_2\ (3) + 1/2\ DMH_2O\ (3) - DMSO_2\ (1) - 1/2\ DMH_2O\ (1)$$

where

$DMSO_2$ (3) : molar flow rate of the $SO_2$ from zone 3 ;

$DMSO_2$ (1) : molar flow rate of the $SO_2$ from zone 1 ;

$DMH_2O$ (3) : molar flow rate of $H_2O$ from zone 3 ; and

$DMH_2O$ (1) : molar flow rate of $H_2O$ from zone 1.

8. A process according to one of Claims 1 to 7, in which the separation of sulfur in stage (b) is preceded by passing the gases through a Claus type converter.

9. Cyclic process for purifying a gas containing hydrogen sulfide and/or carbon oxysulfide and/or carbon sulfide, comprising cyclically a purification stage of passing the gas on an iron oxide mass and a regeneration stage of passing an oxidizing gas on the sulfided mass for regeneration thereof, characterized in that the regeneration comprises the following steps :

a) the mass of sulfided iron oxide is brought into contact with a regeneration gas containing at least 5 % by volume of sulfur dioxide and at least one of the reagents from the group of gaseous elemental sulfur and steam, at least one of these being present in a quantity satisfying the condition :

— gaseous sulfur : at least 100 ppm by volume, expressed as $S_2$ ; and

— steam : at least 3 % by volume, expressed as $H_2O$ ;

at a temperature of 600 to 1 100 °C, under a pressure of 0.1 to 50 bars so as to convert the mass into iron oxide and form a gas enriched with elemental sulfur ;

b) a part of the elemental sulfur contained by the resultant gas is separated from it ;

c) the resultant gas, freed from part of its sulfur, is reacted with a make-up gas containing molecular oxygen at a temperature of 300 to 1 500 °C, under a pressure of 0.1 to 50 bars, the quantity of oxygen introduced being chosen so as to satisfy a double condition :

α) to have

$$\frac{0.5\ DMS_2 + 0.75\ DMH_2S + 2\ DMH_2}{DMO_2} > 1.04$$

where

$DMS_2$ : molar flow rate of elemental sulfur (expressed as $S_2$) in the gas subjected to stage (c) ;

$DMH_2S$ : molar flow rate of hydrogen sulfide in the recycling gas subjected to stage (c) ;

$DMH_2$ : molar flow rate of hydrogen in the recycling gases at stage (c) ; and

$DMO_2$ : molar flow rate of make-up oxygen ;

and

β) to raise the sulfur dioxide content of the gas to at least 5 % by volume ; and

d) the gas obtained at stage (c) is recycled to stage (a).

10. A process according to claim 9, wherein the regeneration gas of step (a) comprises at least 50 % by volume of sulfur dioxide and at least 400 ppm by volume of gaseous sulfur and/or at least 10 % by volume of steam.

**Patentansprüche**

1. Verfahren zur Regeneration einer Masse von schwefelhaltigem Eisenoxid, dadurch gekennzeichnet, daß es folgende Stufen umfaßt :

a) man bringt die Masse des schwefelhaltigen Eisenoxids in Kontakt mit einem Regenerationsgas, das mindestens 5 Vol.-% Schwefeldioxid und mindestens eines der Reagentien gasförmiger elementarer Schwefel und Wasserdampf enthält, wobei mindestens eines derselben in ausreichender Menge vorliegt, um die folgende Bedingung zu erfüllen :

— gasförmiger Schwefel : zumindest 100 Vol-ppm, ausgedrückt als $S_2$ ;

— Wasserdampf : zumindest 3 Vol-% ausgedrückt als $H_2O$ ;

bei einer Temperatur von 600-1 100 °C, unter einem Druck von 0,1-50 bar, derart daß die Masse in Eisenoxid überführt und ein Gas, das an elementarem Schwefel angereichert ist, gebildet wird.

b) man trennt von dem erhaltenen Gas einen Teil des darin enthaltenen elementaren Schwefels ab.

c) man läßt das erhaltene Gas, das von einem Teil seines Schwefels befreit ist, bei einer Temperatur von 300 bis 1 500 °C und einem Druck von 0,1 bis 50 bar mit einem Zusatzgas reagieren, das molekularen Sauerstoff enthält, wobei die eingeführte Sauerstoffmenge derart gewählt ist, daß sie die folgende doppelte Bedingung erfüllt :

α) zu haben

$$\frac{0{,}5\ DMS_2 + 0{,}75\ DMH_2S + 2\ DMH_2}{DMO_2} > 1{,}04$$

worin bedeuten :

$DMS_2$ : molarer Durchsatz an elementarem Schwefel (ausgedrückt als $S_2$) in dem Gas, das der Stufe (c) unterworfen wird,

$DMH_2S$ : molarer Durchsatz an Schwefelwasserstoff in dem Rückführgas, das der Stufe (c) unterworfen wird,

$DMH_2$ : molarer Durchsatz an Wasserstoff im Rückführgas, das der Stufe (c) unterworfen wird,

$DMO_2$ : molarer Durchsatz an Zusatzsauerstoff

und :

β) den Gehalt an Schwefeldioxid im Gas auf zumindest 5 Vol-% zu bringen und

d) man führt das in der Stufe (c) erhaltene Gas in die Stufe (a) zurück.

2. Verfahren nach Anspruch 1, dadurch gekennzeichnet, daß man in der Stufe (b) 10 bis 90 % des Schwefels abtrennt.

3. Verfahren nach Anspruch 1 oder 2, dadurch gekennzeichnet, daß die Kontaktbedingungen der Stufe (a) einer im allgemeinen endothermen oder athermen Reaktion entsprechen.

4. Verfahren nach einem der Ansprüche 1 bis 3, dadurch gekennzeichnet, daß das Regenerationsgas der Stufe (a) zumindest 50 Vol-% Schwefeldioxid und zumindest 400 Vol-ppm an gasförmigem Schwefel und/oder zumindest 10 Vol.-% an Wasserdampf enthält.

5. Verfahren nach einem der Ansprüche 1 bis 4, dadurch gekennzeichnet, daß das Regenerationsgas praktisch keinen molekularen Sauerstoff enthält.

6. Verfahren nach einem der Ansprüche 1 bis 5, dadurch gekennzeichnet, daß in den Stufen (a) und (c) die Temperatur 600 bis 1 100 °C und der Druck 1-20 bar betragen.

7. Verfahren nach einem der Ansprüche 1 bis 6, dadurch gekennzeichnet, daß die in der Stufe (c) eingeführte Sauerstoffmenge der folgenden Bedingung entspricht :

$$DMO_2 = DMSO_2\ (3) + 1/2\ DMH_2O\ (3) - DMSO_2\ (1) - 1/2\ DMH_2O\ (1)$$

worin bedeuten :

$DMSO_2$ (3) : molarer Durchsatz an $SO_2$ aus der Zone 3,
$DMSO_2$ (1) : molarer Durchsatz an $SO_2$ aus der Zone 1,
$DMH_2O$ (3) : molarer Durchsatz an $H_2O$ aus der Zone 3,
$DMH_2O$ (1) : molarer Durchsatz an $H_2O$ aus der Zone 1.

8. Verfahren nach einem der Ansprüche 1 bis 7, dadurch gekennzeichnet, daß der Abtrennung des Schwefels der Stufe (c) ein Durchgang des Gases durch einen Konverter vom Typ Claus vorangeht.

9. Cyclisches Verfahren zur Reinigung eines Gases, das Schwefelwasserstoff und/oder Kohlenoxidsulfid und/oder Schwefelkohlenstoff enthält, das eine cyclische Reinigungsstufe aufweist, die darin besteht, das Gas über eine Masse an Eisenoxid zu führen und eine Stufe der Regeneration, die darin besteht, ein oxidierendes Gas über die schwefelhaltige Masse zu leiten, um diese Masse zu regenerieren, dadurch gekennzeichnet, daß die Regeneration die folgenden Stufen aufweist :

a) man bringt die Masse an schwefelhaltigem Eisenoxid mit einem Regenerationsgas, das zumindest 5 Vol-% Schwefeldioxid und zumindest eines der Reagentien gasförmiger elementarer Schwefel und Wasserdampf enthält, wobei zumindest eines davon in einer Menge vorliegt, welche die folgende Bedingung erfüllt :

— gasförmiger Schwefel : zumindest 100 Vol-ppm, ausgedrückt als $S_2$,
— Wasserdampf : zumindest 3 Vol-%, ausgedrückt als $H_2O$,

bei einer Temperatur von 600-1 100 °C und einem Druck von 0,1-50 bar in solcher Weise in Kontakt, daß die Masse in Eisenoxid überführt und ein an elementarem Schwefel angereichertes Gas gebildet wird ;

b) daß man aus dem erhaltenen Gas einen Teil des Schwefels abtrennt, den es enthält ;

c) daß man das erhaltene Gas, das von einem Teil seines Schwefels befreit ist, mit einem Zusatzgas bei einer Temperatur von 300 bis 1 500 °C und einem Druck von 0,1-50 bar reagieren läßt, das molekularen Sauerstoff enthält, wobei die eingeführte Sauerstoffmenge derart gewählt ist, daß sie die folgende doppelte Bedingung erfüllt :

α) zu haben

$$\frac{0{,}5\ DMS_2 + 0{,}75\ DMH_2S + 2\ DMH_2}{DMO_2} > 1{,}04$$

worin bedeuten :

$DMS_2$ : molarer Durchsatz an elementarem Schwefel (ausgedrückt als $S_2$) in dem Gas, das der Stufe (c) unterworfen wird,
$DMH_2S$ : molarer Durchsatz an Schwefelwasserstoff in dem Rückführgas, das der Stufe (c) unterworfen wird,
$DMH_2$ : molarer Durchsatz an Wasserstoff in dem Rückführgas, das der Stufe (c) unterworfen wird,
$DMO_2$ : molarer Durchsatz an Zusatzsauerstoff

und :

β) den Gehalt an Schwefeldioxid im Gas auf zumindest 5 Vol-% zu bringen und

d) daß man das in der Stufe (c) erhaltene Gas zur Stufe (a) zurückführt.

10. Verfahren nach Anspruch 9, dadurch gekennzeichnet, daß das Regenerationsgas der Stufe (a) zumindest 50 Vol-% Schwefeldioxid und zumindest 400 Vol-ppm an gasförmigem Schwefel und/oder zumindest 10 Vol-% an Wasserdampf enthält.

FIG.1

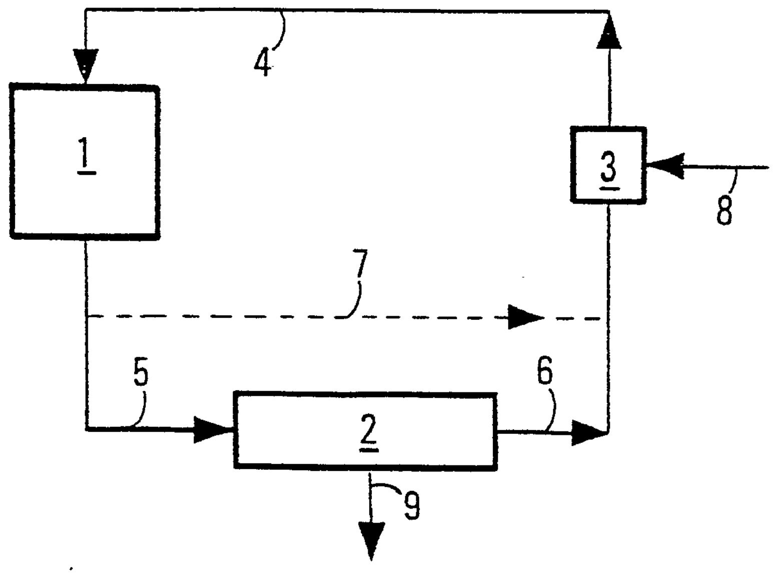


FIG.2

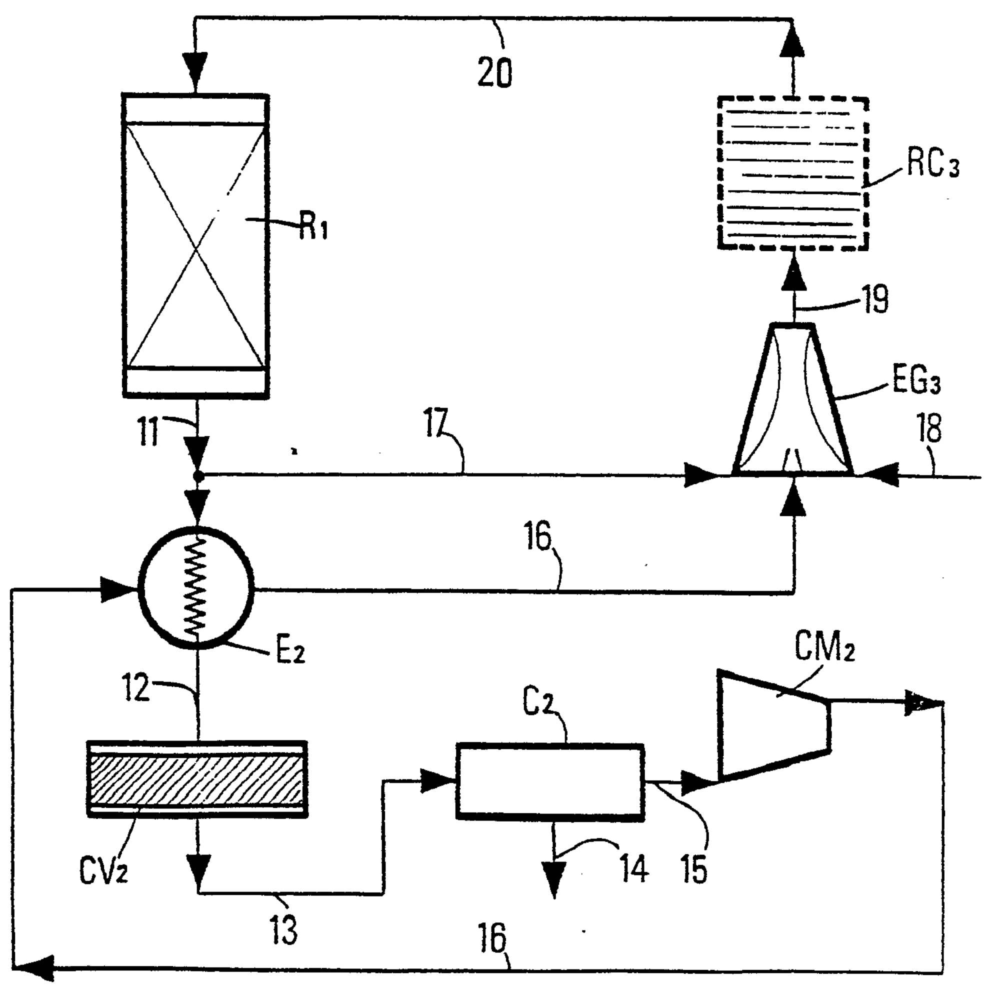

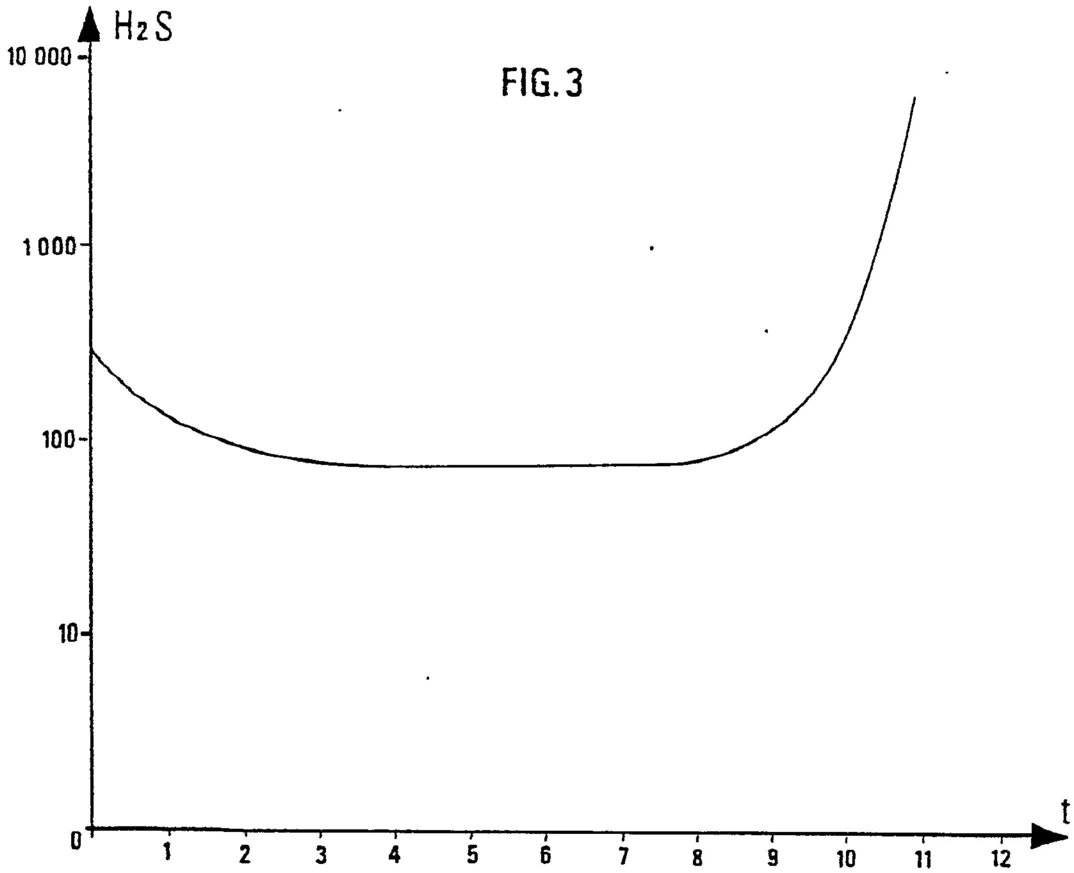
H2S
10 000
1 000
100
10
0
1
2
3
4
5
6
7
8
9
10
11
12
t

FIG. 3

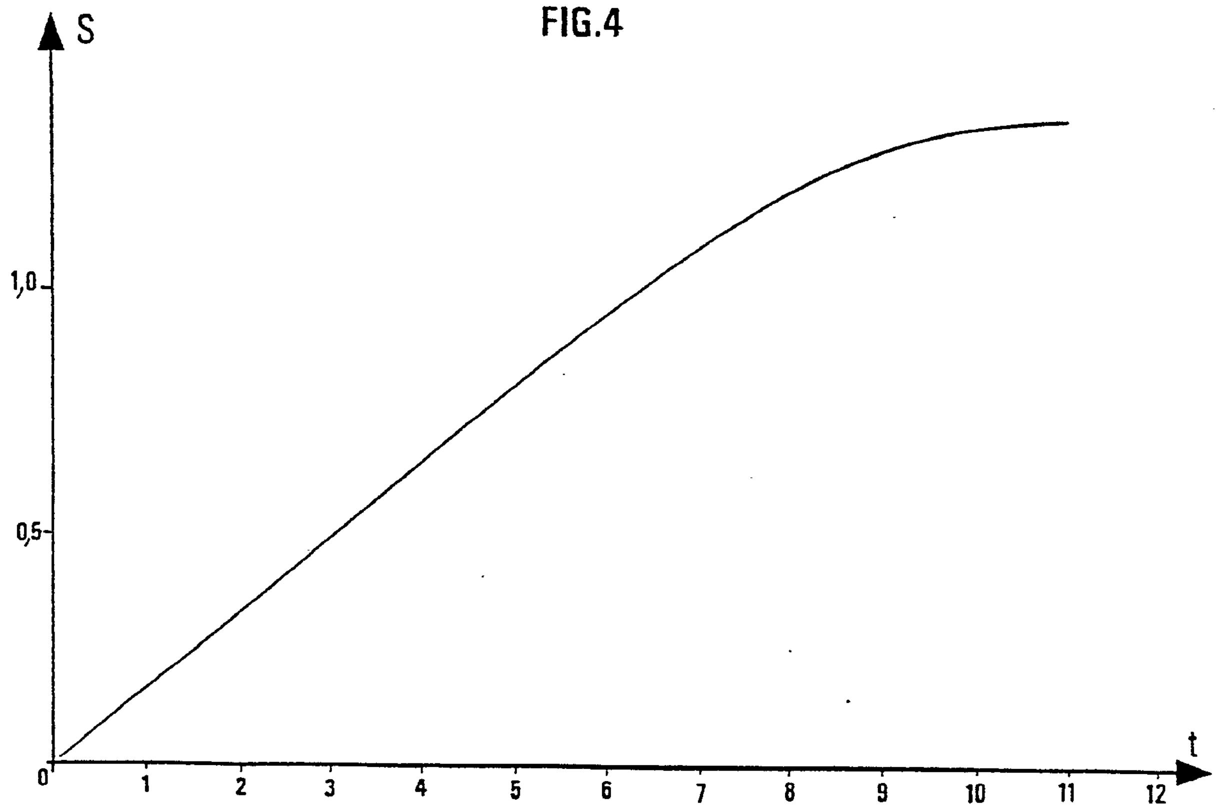
S
1,0
0,5
0
1
2
3
4
5
6
7
8
9
10
11
12
t

FIG.4